# EUROPEAN PATENT SPECIFICATION

(11) **EP 2 858 417 B1**
(45) Date of publication and mention of the grant of the patent: **27.12.2017**
(21) Application number: 14195956.9
(22) Date of filing: 13.04.2011
(51) Int. Cl.: H04W 40/36, H04L 12/707

(54) **METHOD FOR TRANSMITTING A MPLS HEADER, METHOD FOR ESTABLISHING A MPLS PATH AND METHOD FOR PERFORMING A HANDOVER OF AN MPLS PATH**
VERFAHREN ZUR ÜBERTRAGUNG EINES MPLS-HEADERS, VERFAHREN ZUR EINRICHTUNG EINES MPLS-PFADES UND WEITERLEITUNGSVERFAHREN FÜR EINEN MPLS-PFAD
PROCÉDÉ DE TRANSMISSION D'UN EN-TÊTE MPLS, PROCÉDÉ D'ÉTABLISSEMENT D'UN CHEMIN MPLS ET PROCÉDÉ DE RÉALISATION D'UN TRANSFERT D'UN CHEMIN MPLS

(43) Date of publication of application: 08.04.2015
(62) Divisional of application: 11717482.1
(73) Proprietor: Deutsche Telekom AG, 53113 Bonn (DE)
(72) Inventor: Schatzmayr, Rainer, 53229 Bonn (DE)
(74) Representative: Schwöbel, Thilo K.

(56) References cited:
- US-A1- 2010 020 812
- US-A1- 2010 177 685
- US-A1- 2011 058 479

## Description

### BACKGROUND

The present invention relates to a method for transmitting a Multi-Protocol Switching (MPLS) header from a first nodal point to a second nodal point via a radio communication network, in particular a Long Term Evolution (LTE) network. Furthermore, the present invention relates to methods for establishing a Multi-Protocol Switching (MPLS) path between a first node and a second node through a wired part of a mobile network by means of Multi-Protocol Switching (MPLS) and through a radio network part of the mobile network by means of a Long Term Evolution (LTE) network radio bearer. A further subject of the present invention is a method for performing a handover of an Multi-Protocol Label Switching (MPLS) path established between a first node (A1) and a second node (A3) through a wired part of a mobile network by means of Multi-Protocol Switching (MPLS) and through a radio network part of the mobile network by means of a Long Term Evolution (LTE) network radio bearer. An example of the prior art can be found in US2011/058479.

The well-known Multi Protocol Label Switching (MPLS) networks form the basis of data networks of wireline network operators. These MPLS networks are used for many purposes as transport of IP traffic, transport of Ethernet traffic, etc... In recent years, MPLS networks have been extended to present high resilience grades, and be able to recover from a failure situation in times of less than 50 milliseconds. MPLS Fast Reroute, RSVP-TE extensions for MPLS re-route is an example for such extensions.

Furthermore, 4^{th} generation networks like Long Term Evolution (LTE) form the basis for wireless networks. LTE networks are currently focusing on IP traffic only. As a wireless network, one of the main characteristics of such networks is the capability to handle mobility, where a remote note, i.e. a node connected via a radio interface is not bound to a specific antenna but can move from one antenna to another without losing its connectivity to the rest of the network. Another important aspect is the handover capability where an active data connection can be moved from one antenna to another without interruption of the data flow.

There are a set of factors that are pushing both networks (MPLS and LTE) closer to each other. First the bandwidth that can be achieved with LTE, although not as high as for MPLS, is sufficient to provide MPLS connectivity services to a remote node. Second, networks are converging from pure wireline and pure wireless to convergent networks. The use of a convergent network able to deliver connectivity services making use of MPLS and LTE allows for new market opportunities, particularly if aligned with a mobility scheme that can simplify the deployment of MPLS networks at remote sites.

It is therefore an objective of the present invention to provide improved MPLS connectivity services to remote sites accessed via a LTE network in order to efficiently combine MPLS and LTE networks.

### SUMMARY

One object of the present invention is to provide a method for efficiently transmitting a Multi-Protocol Switching (MPLS) header from a first nodal point to a second nodal point via a radio communication network, in particular a Long Term Evolution (LTE) network which takes a reduced data transmitting capacity of radio communication networks compared to wired communication networks into account.

The object of the present invention is achieved by a method for transmitting a Multi-Protocol Label Switching (MPLS) header from a first nodal point to a second nodal point via a radio communication network, in particular a Long Term Evolution (LTE) network, comprising the steps of modifying the Multi-Protocol Label Switching header by reducing the size of the Multi-Protocol Label Switching header and transmitting the modified Multi-Protocol Label Switching header from the first nodal point to the second nodal point by means of an air interface using a dedicated radio bearer.

It is thereby advantageously possible to save bandwidth in the transmission of the MPLS header, so that a reduced data transmitting capacity is sufficient for effective MPLS data transfer via the wireless radio communication network. Preferably, the size of the Multi-Protocol Label Switching header can be reduced by removing a MPLS bit label of the Multi-Protocol Label Switching header because the MPLS bit label is not required for the transmission via the air interface as the air interface uses a one-to-one correspondence via a radio bearer.

According to another object or another embodiment of the present invention, the Multi-Protocol Label Switching header is modified by adding a sequence number to the Multi-Protocol Label Switching header. It is hereby advantageously possible that the receiving entity is capable of verifying the integrity of the received MPLS data by analyzing the sequence number. Preferably, the received data can be re-ordered by the receiving entity in dependency of the sequence numbers.

According to a preferred embodiment of the present invention a ciphering mechanism is applied to the Multi-Protocol Label Switching layer in order to protect the transmitted data. Preferably, the transferred data are de-modified at the receiving nodal point, e.g. by adding a MPLS bit label to the Multi-Protocol Label Switching header which is configured in dependency of a control layer of the modified Multi-Protocol Label Switching header, by re-ordering the MLPS data in dependency of the sequence number, by removing the sequence number and/or by applying a deciphering mechanism to the received Multi-Protocol Label Switching header, in order to recover the initial MPLS header. One of the first nodal point or the second nodal point preferably comprises a mobile node (e.g. a cell phone, a PDA (Personal Digital Assistant) or the like) providing mobile wireless functionality, wherein the other of the first and the second nodal points comprises a MPLS router (e.g. a MPLS Label Edge Router (LER) or a MPLS Label Switch Router (LSR)) providing MPLS functionality. The LTE network preferably comprises a generic 4^{th} generation network.

Another object or another embodiment of the present invention is a method for establishing an Multi-Protocol Label Switching (MPLS) path between a first node and a second node through a wired part of a mobile network by means of Multi-Protocol Label Switching (MPLS) and through a radio network part of the mobile network by means of a Long Term Evolution (LTE) radio bearer comprising the steps of establishing a LTE radio bearer between a first mobile node directly or indirectly connected to the first node and a first Label Switch Router directly or indirectly connected to the second node, transmitting an identifier from the first Label Switch Router to a mobile network controller of the radio network part, wherein the identifier contains information about the air interface bearer to be used for the MPLS path between the first mobile node and the first Label Switch Router and establishing the MPLS path between the first node and the second node partly via the LTE radio bearer by using the identifier information.

Advantageously, the mobile network controller informs a MPLS Label Edge Router (LER) or a MPLS Label Switch Router (LSR) embedded into the wired part of the network about the air interface bearer which should be used in order to forward the MPLS request over the radio network via the air interface, so that the MPLS path/request on the one hand and the radio bearer on the other hand are unambiguously allocated to each other. Preferably, the mobile network controller is informed by the first Label Switch Router that the MPLS path identified by the identifier information has been established, so that the mobile network controller is capable of verifying that the MPLS path has been established by using the allocated radio bearer. Preferably, the MPLS path request is initially generated by the first node and wherein the second node confirms the MPLS path to the first node after the MPLS path between the first node and the second node has been established.

Another object or another embodiment of the present invention is a method for establishing an MPLS path between a first node and a second node through a wired part of a mobile network by means of Multi-Protocol Label Switching (MPLS) and through a radio network part of the mobile network by means of a Long Term Evolution (LTE) radio bearer comprising the steps of establishing a LTE radio bearer between a first mobile node directly or indirectly connected to the first node and a first Label Switch Router, transmitting an identifier from the first Label Switch Router via a mobile network controller of the radio network part to a further Label Switch Router directly or indirectly connected to the second node, establishing an MPLS path between a first node and a second node via the further Label Switch Router, the first Label Switch Router and the first mobile node by using the identifier, wherein the identifier indicates that the MPLS path has to be established via the first Label Switch Router and wherein the identifier contains information about the air interface bearer to be used for the MPLS path between the first mobile node and the first Label Switch Router.

It is thereby advantageously possible that the further Label Switch Router (e.g. a MPLS Label Edge Router (LER) or a MPLS Label Switch Router (LSR) embedded into the wired part of the network) is informed by the mobile network controller that the MPLS request should be routed about the first Label Switch Router in order to establish an air interface towards the first node (or the first mobile node) over the radio network. Preferably, a MPLS path request is transmitted from the further Label Switch Router to the first Label Switch Router and wherein the first Label Switch Router associates the incoming MPLS path request with the established MPLS bearer and forwards the MPLS path request to the first mobile node, so that the MPLS path/request on the one hand and the radio bearer on the other hand are unambiguously allocated to each other. The mobile network controller is preferably informed by the first Label Switch Router that the MPLS path identified by the identifier information has been established. Furthermore, the MPLS path request is initially generated by the second node, wherein the first node confirms the MPLS path to the second node after the MPLS path between the first node and the second node has been established.

Another object or another embodiment of the present invention is a method for performing a handover of an Multi-Protocol Label Switching (MPLS) path established between a first node and a second node comprising the steps of measuring radio signals by a first mobile node directly or indirectly connected to the first node and providing a first Label Switch Router indirectly connected to the second node via a further Label Switch Router with information about the measured radio signals, transmitting a handover command from the first Label Switch Router via a mobile network controller of the radio network part to the further Label Switch Router, if the first Label Switch Router determines on the basis of the measured radio signals that a handover is required, wherein the handover command contains information that the MPLS path has to be redirected via a second Label Switch Router, transmitting a MPLS request to the second Label Switch Router from the further Label Switch Router in dependency of the received handover command, transmitting handover parameters from the first Label Switch Router to the second Label Switch Router, establishing a LTE radio bearer between the first mobile node and the second Label Switch Router, transmitting an identifier update command from the second Label Switch Router via the mobile network controller to the further Label Switch Router and establishing an MPLS path between a first node and a second node via the further Label Switch Router, the second Label Switch Router and the first mobile node.

It is thereby advantageously possible that a MPLS handover is provided by primarily establishing an air interface between the first mobile node and the second Label Switch Router and subsequently informing the further Label Switch Router by the mobile network controller that the MPLS path should be routed via the second Label Switch Router instead of the first Label Switch Router. Preferably, the further Label Switch Router afterwards deletes the MPLS path to the first Label Switch Router in dependency of the received identifier update command.

According to a preferred embodiment of the present invention a Multi-Protocol Label Switching (MPLS) header is transmitted via the established MPLS path between the first mobile node and the first Label Switch Router and/or between the first mobile node and the second Label Switch Router by said method for transmitting a Multi-Protocol Label Switching (MPLS) header from a first node to a second node in accordance with the present invention.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 shows schematically a MPLS network using wireless connections like LTE networks according to the present invention.
Figure 2 shows schematically a diagram of the protocol stack of MPLS frames and a method for transmitting the MPLS header according to the present invention.
Figure 3 shows schematically flow diagrams of a method for establishing an MPLS path according to a first embodiment of the present invention.
Figure 4 shows schematically flow diagrams of a method for establishing an MPLS path according to a second embodiment of the present invention.
Figure 5 shows schematically flow diagrams of a method for performing a handover of an MPLS path according to a third embodiment of the present invention.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. a", an", the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

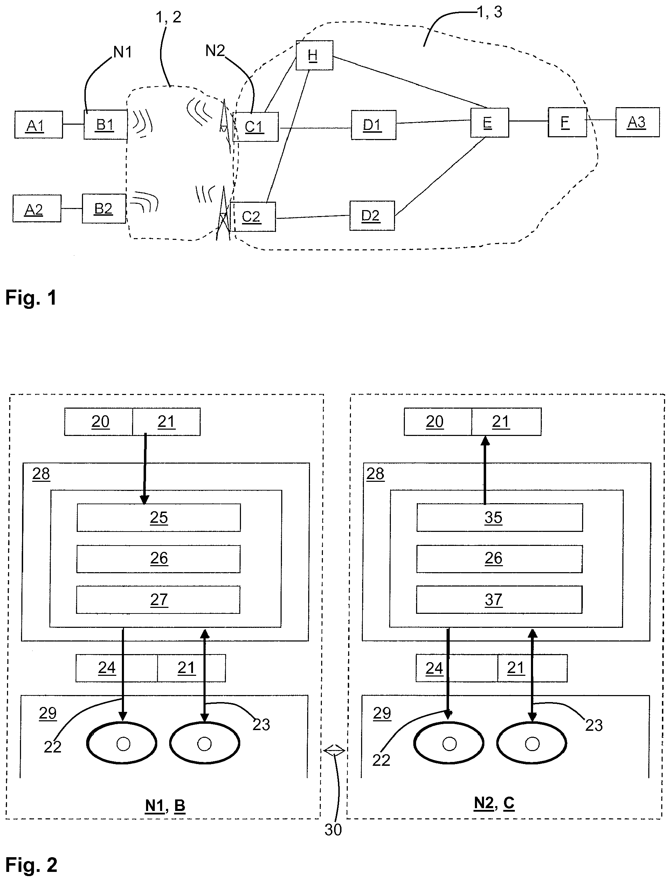

Figure 1 shows schematically a network combining MLPS technology with wireless connections like LTE networks by using methods according to the present invention.

The method for establishing an MPLS path between a first node A1 and a second node A3 according to the present invention is used to establish MPLS connectivity between two end systems (also referred to as first node A1 and second node A3) of the network by using MPLS technology to connect to each other. End systems A1, A3 communicating via a MPLS connection can be located at a first or second mobile node B1, B2 connected via a mobile device, or connected via a fixed device (shown as F) (A1-A3-MPLS connection case).

The method according to the present invention can also be used to connect two nodes via mobile devices only (shown as A1 and A2). Each of these nodes would make use of its own mobile device B1, B2 to connect to the network operator. This behavior is similar to said A1-A3-MPLS connection case, however node E being connected to D2 instead of F.

The first and second mobile nodes B1, B2 behave from end node A1, A2 perspective as an MPLS Label Edge Routers (LER) or as MPLS Label Switch Routers (LSR) depending on the functionality expected by nodes A1, A2. In case A1 (or A2) acts as a LER, the nodes B1 (or B2) act as LSR. In case A1 (or A2) do not operate as LER, the LER functionality is provided by the nodes B1 (or B2).

The mobile nodes B1, B2 connect to mobile base stations C1, C2 via a mobile communication network 1 and in particular via a radio network part 2 of the mobile communication network 1. This mobile network 1 can be e.g. a network similar to LTE. The mobile network is preferably capable of encapsulating MPLS packets and transmits them over the air interface. The method of transmitting a MPLS header from a first node N1 (N1 complies with B1 in the present example) to a second node N2 (N2 complies with C1 in the present example) according to the present invention defines an encapsulation of MPLS packets over LTE networks. See description of figure 2 below.

The MPLS packets transferred over the air interface are received by the nodes C1 (or C2). These nodes are able to de-encapsulate MPLS packets and forwarded them to nodes D1 (or D2). Nodes C1 (and C2) act as LSR routers. Nodes D1 (and D2) act as traditional MPLS LSR nodes. Many D1 nodes can be cascaded.

The node E is a MPLS LSR node where the nodes C1-D1 and C2-D2 come together for the first time. The node chain C1-D1-E is usually based on optical fibre to achieve large bandwidth and low transmission delay. The node E plays an important role in case of mobility scenarios where the MPLS connection is transferred from one node like C1 to a node like C2.

The node F is either a MPLS LER or a LSR. This node acts as the interface towards the node A3. If the node A3 is an MPLS enabled node, the node F acts as a LSR. In case the node A3 is not MPLS enabled, the node F acts as a LER.

The nodes described in this patent should be understood as logical nodes that can be combined in integrated physical nodes. Several combinations are possible:
- Nodes D1 and E can be combined in one or more physical node.
- Nodes C1, D1 and E in one or more physical node.
- Nodes A1 and B1 can be combined in a single node.
- Nodes F and A3 can be combined in a single node.

Node H is responsible for the mobility case when a node like B1 has to move its wireless connectivity from C1 to C2, and keep the MPLS connection between A1 and A2 or A3. The node H acts as a mobility controller indicating to the involved nodes when the MPLS connections across the nodes have to be modified. The transfer of active MPLS connection is described in section MPLS handover.

There are some pre-conditions for the handling of MPLS paths:
- The nodes A1, B1, C1, D1, A2, B2, C2, D2, E, F, A3, and H have distinct routable IP addresses. This allows nodes to have unique identifiers for each node participating in the MPLS path. IP addresses for nodes B1 and B2 are allocated as part of the standard LTE connection establishment.
- Nodes B1, C1, D1, E, and F are capable of routing IP packets, able to handle internal gateway protocols (IGP) like OSPF, IS-IS, or RIP, and able to handle MPLS protocols as LDP, and RSVP-TE. These nodes are able to propagate routing information, and to perform the steps needed to establish an MPLS path like resource reservation.
- Node E or node F may further run eBGP if node A3 is outside the mobile operator IP network. However this requires additional extensions to eBGP and MPLS that are outside the scope of this patent.
- Node B1 (or node B2) may further run eBGP is node A1 (or A2) is outside the mobile operator IP network. However this requires additional extensions to eBGP and MPLS that are outside the scope of this patent.

Figure 2 shows schematically a diagram of the protocol stack of MPLS frames and a method for transmitting the MPLS header 24 according to the present invention. The method of transmitting the MPLS header 24 comprises steps of modifying and de-modifying the MPLS header 24. In the following these steps are also referred to as encapsulating and de-encapsulating the MPLS header 24.

The diagram illustrated in figure 2 shows an MPLS frame 21 and data 22 flowing from a mobile node B (first node N1 in the present example) through the radio network part 2 of the mobile network 1 to a mobile base station C1 which is a Label Switching Router (second node N2 in the present invention). A flow direction from the second node N2 (C) to the first node N1 (B) would be in analogue form, where node C would perform the MPLS PDPC layer 28 functions shown as of node B and vice-versa.

The main objective for the MPLS encapsulation is to save bandwidth at the air interface by reducing the MPLS header 24, to establish a mechanism based on sequence number 26 to detect losses at the air interface, and to protect the data integrity.

Bandwidth is saved at the air interface by reducing the MPLS header size. The present invention makes use of the fact that the MPLS path 30 established via the air interface makes use of a dedicated radio bearer. This radio bearer can be of unidirectional 22 (uplink or downlink) or bidirectional 23 (both directions) form.

The MPLS header 24 has 4 basic fields: a 20 bit label, a 4 bit control sequence and an 8 Time-to-live field. The MPLS header 24 can be reduced in the MPLS PDPC layer 28 functions performed by the first Node N1 by eliminating the MPLS 20 bit labels in a modifying step of label reduction 25 as there is a one-to-one correspondence between bearers 22, 23 and MPLS paths 30. This generates a reduced MPLS header 24 of 12 bits length consisting of the 4 control bits and the 8 bits with Time-to-live.

A 4 bit sequence number 26 is added to the reduced MPLS header (12 bits). This sequence number 26 is 0 on the first MPLS frame to be sent over a bearer and incremented by one at each subsequent MPLS frame. This results in a new MLPS header 24 of 16 bits where: 4 bits are used for sequence numbering 26, 4 bits are used to carry the original MPLS control bits, and 8 bits are used to carry the original TTL field. The sequence number 26 can be used by the receiving MPLS PDPC entity to detect losses, and re-order received data. The sequence number 26 can also be used for the management of timers and acknowledgement mechanisms of underlying layers (RLC layer 29 in the LTE case).

The ciphering mechanism 27 applied to the MPLS PDPC layer is the same as the ciphering specified by 3GPP for the LTE case. This is state-of-the-art and not described in more details here.

The usage of the MPLS header reduction mechanism and the encryption mechanism are controlled by the node B and node C. Both can be configured not to be used. In case of not use, only the sequence numbers 26 are added to the original MPLS frame 24, and no header reduction or ciphering takes place.

At the remote site, mobile devices like B encapsulate MPLS frames in order to transfer them to node C. The encapsulation is performed by removing the MPLS label, adding the sequence number 26 and applying the ciphering 27 if configured to do so. These encapsulated MPLS frames 24 can then be mapped to both LTE logical and physical channels.

At the node C, the encapsulated MPLS frames 24 are de-encapsulated in a de-modifying step 35. If configured to check for integrity, the received frames are subjected to an integrity check 37 by verifying the ciphering integrity. By checking the sequence number 26, MPLS frames out of order are reordered, to be delivered in ordered sequence to the upper layer. Before forwarding the MPLS frames to the next node, the node C constructs 35 a MPLS label by adding the appropriate MPLS label. This label is configured by the control layers during bearer establishment phase. After the header construction the MPLS frame can be forwarded according to MPLS procedures like label switching.

In a similar form, packets sent from node C to node B are encapsulated at node C and de-encapsulated at node B.

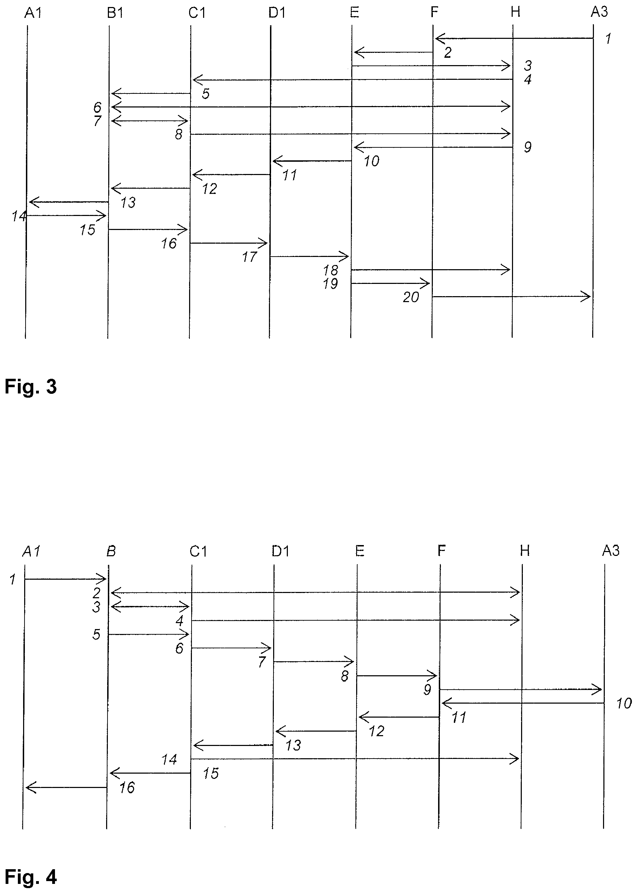

Figure 3 shows schematically flow diagrams of a method for establishing an MPLS path according to a first embodiment of the present invention. An MPLS path between nodes A1 (first node) and A3 (second node) can be initiated by either A1 or A3. In both cases a label distribution protocol like LDP or RSVP-TE is used to request the allocation of an MPLS path along all involved nodes. There are some small differences in the flow of information exchanged between nodes to setup the MPLS path between the case where the MPLS path is initiated by node A1 instead of node A3. These differences are highlighted at the end of this section.

A special role for the setup of an MPLS connection is performed by the node E of the reference diagram of figure 1. The node E anchors the mobility aspects of the MPLS path, and the fast re-route protection of the MPLS protocol. All MPLS connection to be established via the LTE air interface must pass through node E. There can be multiple nodes E in the overall network. However, a node of type E must always be involved.

On connection setup, the MPLS path is setup in two separate paths. One path covers the mobile part from node B1 to node E and another path covers the part from node E to node F. The node E brings the two paths together.

Connection establishment from node A3 to node A1 is performed as described by the information flow diagrams of Figure 3. The text below describes the individual steps:
Steps 1 and 2 are MPLS standard conform:
   1. A3 signals to node F via LDP / RSVP-TE or another MPLS label management control protocol that a new MPLS path shall be established to node A1. A previous a routing announcement is assumed to have signalled that node A1 is reachable via node E and F.
   2. Node F processes the LPD / RSVP-TE or another MPLS control protocol requests for the new path and forwards the request to node E.
Step 3 is neither MPLS nor LTE standard conform:
   3. On reception of the LDP / RSVP-TE / other protocol request to establish an MPLS path inside the mobile network, node E checks its routing tables and identifies that node B1 has announced a route to node A1. In order to detect to which node C inside the mobile network the node B1 is connected to, node E sends a paging request for node B1 to the node H.
Steps 4 to 7 are LTE standard conform.
   4. The node H sends a paging request for node B1 to node C1.
   5. Node C1 pages node B1
   6. If authentication is needed, node B1 performs an authentication procedures with node H
   7. Node B1 and C1 establish an LTE logical and physical radio bearer.
Steps 8 and 9 are neither MPLS nor LTE standard conform:
   8. Node C1 informs the context of the new bearer to node H. This context contains, beside the LTE air interface context, an identifier for the MPLS bearer that is used for connection management and handover. This MPLS bearer contains the C1 identifier, and an identifier for the air interface bearer to be used for the MPLS path.
   9. Node H provides to node E as part of the response to the paging request the information that the routing to node B1 shall be established via node C1. By checking its internal routing tables, the node E determines that the MPLS path has to pass node D1 to reach C1.
Steps 10 to 11 are MPLS standard conform:
   10. Node E forwards the MPLS path request via LDP/RSVP-TE or another MPLS control protocol to node D1.
   11. Node D1 forwards the MPLS path request to node C1.
Step 12 is neither MPLS nor LTE standard conform:
   12. Node C1 received the MPLS path request for node A1 via B1 and identifies the MPLS bearer that has been established to node B1 that is not in use. Node C1 associates the incoming MPLS path request with the established MPLS bearer. Node C1 forwards the MPLS path request to node B1 via LPD/RSVP-TE or another MPLS control protocol. However no MPLS label is allocated for the C1 - B1 interface.
Steps 13 and 14 are MPLS standard conform:
   13. Node B1 forwards the MPLS path request to node A1 via LPD/RSVP-TE or another MPLS control protocol.
   14. Node A1 confirms the MPLS path via LPD/RSVP-TE or another MPLS control protocol.
Step 15 is neither MPLS nor LTE standard conform:
   15. Node B1 forward the confirmation of the MPLS path, however no label is allocated for the interface B1 to C1.
Steps 16 to 17 are MPLS standard conform:
   16. Node C1 confirms the MPLS path via LPD/RSVP-TE or another MPLS control protocol.
   18. Node D1 confirms the MPLS path via LPD/RSVP-TE or another MPLS control protocol. Once the node E receives the response from the LDP/RSVP-TE or another MPLS control protocol that the path has been successfully established until node A1, it connects logically the path to A1 with the path to A3, and informs node H about the MPLS path establishment.
Steps 19 to 20 are MPLS standard conform:
   19. Node E confirms the MPLS path via LPD/RSVP-TE or another MPLS control protocol.
   20. Node F confirms the MPLS path via LPD/RSVP-TE or another MPLS control protocol.

Figure 4 shows schematically flow diagrams of a method for establishing an MPLS path according to a second embodiment of the present invention. In case the connection is initiated by A1 instead of A3, there is a change in the information flow compared to figure 3. This flow is described in Figure 4. The text below describes the individual steps:
The step 1 is MPLS standards conform:
   1. A1 signals to node B1 via LDP / RSVP-TE or another MPLS label management control protocol that a new MPLS path shall be established to node A3. Previously node B1 must have signalled with an IGP routing protocol that it is able to provide a route to A3.
Steps 2 and 3 are LTE standard conform:
   2. Node B1 performs, if required, authentication with node H.
   3. Node B1 establishes a new logical and physical radio bearer with node C1. The steps 4 and 5 are neither MPLS nor LTE standard conform:
   4. Node C1 informs the context of the new bearer to node H. This context contains, beside the LTE air interface context, an identifier for the MPLS bearer that is used for connection management and handover.
   5. Node B1 signals via LDP / RSVP-TE / or another MPLS label management control protocol that an MPLS path should be established to node A3. However no MPLS label is allocated for the B1 c* C1 interface.
Steps 6 to 13 are MPLS standard conform:
   6. Node C1 requests an MPLS path to node A3.
   7. Node D1 requests an MPLS path to node A3.
   8. Node E requests an MPLS path to node A3.
   9. Node F requests an MPLS path to node A3.
   10. Node A3 confirms the MPLS path to node A3.
   11. Node F confirms the MPLS path to node A3.
   12. Node E confirms the MPLS path to node A3.
   13. Node D1 confirms the MPLS path to node A3.
Step 14 is neither MPLS nor LTE standard conform:
   14. Node C1 informs node H that the MPLS path identified by the bearer identifier has been established.
Steps 15 to 16 are MPLS standard conform:
   15. Node C1 confirms the MPLS path to node A3.
   16. Node B1 confirms the MPLS path to node A3.

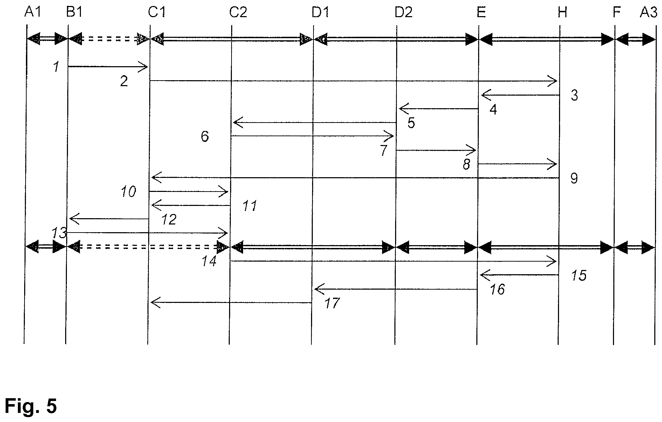

Figure 5 shows schematically flow diagrams of a method for performing a handover of an MPLS path according to a third embodiment of the present invention. Mobility is the capability of the remote node B1 or B2 to be connected to the wireless network even when moving from one site to another. The procedures required to provide mobility are provided by the LTE mobility. The only exception is in case of an active bearer for an MPLS path. In this case the MPLS specific procedures in accordance with the present invention are described below.

The mobile node continuously scans the LTE radio spectrum to detect which LTE radio signals are being detected, and reports these signals to the base station. These reports are used to decide that a handover from one cell to another should take place. An LTE radio signal might degrade because either the mobile node has moved physically, or because the resources available in a cell have become scarce.

The MPLS handover procedure is aligned with the procedures used by LTE for the handover of IP packets. However some differences apply, particularly in the establishment of MPLS connectivity during the handover procedures. This patent describes where such differences apply.

Figure 5 describes the information flow involved with an MPLS handover. Before the MPLS Handover there is a transfer of MPLS frames from node A1 to node B1, from B1 to node C1 via air interface, an MPLS path between nodes C1 and D1 and between nodes D1 and E, E and F and F and A3. After the MPLS handover there is a transfer of MPLS frames from node A1 to node B1, from B1 to node C2 via air interface, an MPLS path between nodes C2 and D2 and between nodes D2 and E, E and F and F and A3.
Step 1 is LTE standard conform:
   1. Node B1 periodically measures the radio signals, and provides a report of such measurements to node Cl.
Steps 2 to 4 are neither MPLS nor LTE standard conform:
   2. Node C1 decides that a handover is better than continuing to camp with C1. The decision criteria for making the handover are not part of this patent. Node C1 informs node H that a MPLS protection path for node B1 via node C2 to node E is needed to protect against the failure of the path B1 via C1 to E.
   3. Node H requests node E to establish an MPLS protection path for B1 via node C2 as an MPLS protection path to the existing MPLS path to B1 via C1.
   4. Node E checks its IP routing tables and identifies that node C2 is reachable via node D2. Node E requests an MPLS protection path to node C2 via node D2. The protection path is established as an MPLS backup tunnel following the RSVP-TE Fast Reroute protocol. The MPLS protection is implemented as a MPLS local repair for the MPLS path connection A1 to A3 protecting against failures along the MPLS path B1 to C1, C1 to D1, and D1 to E. Node E is the merge point where both MPLS paths merge again.
Step 5 is MPLS standard confirm:
   5. Node D2 requests an MPLS protection path to node C2.
Step 6 is neither MPLS nor LTE standard conform:
   6. Instead of forwarding the RSVP-TE request for the MPLS protection to node B1, node C2 immediately confirms the MPLS protection path. Node C2 keeps an internal reference for the MPLS path protecting the MPLS path to node B1 that is expected to be handover.
Step 7 is MPLS standard confirm:
   7. Node D2 confirms the MPLS protection path.
Steps 8 and 9 are neither MPLS nor LTE standard conform:
   8. Node E receives the confirmation that the local repair MPLS path protecting against failures of the B1 to C1 interface has been established. Node E informs node H that the protection path to node B1 has been established.
   9. Node H informs node C1 that a protection for the MPLS path to B1 has been established.
Steps 10 to 13 are partly LTE standard conform but with important extensions to supports the parameters needed for MPLS handover:
   10. Node C1 informs node C2 about a handover, and transfers the relevant parameters.
   11. Node C2 confirms the handover capability to node C1. Node C2 identifies the MPLS protection path that has been previously configured for the handover.
   12. Node C1 informs node B1 to handover to node C2.
   13. Node B1 connects to node C2. As a protected MPLS path has been established before the handover, MPLS packets from node A1 to A3 can continue to flow over the MPLS path protection. The RSVP-TE Fast Reroute protocol ensures that all MPLS frames will follow the protection path via C2 and not the original MPLS path via node C1.
Steps 14 and 15 are neither MPLS nor LTE standard conform:
   14. Node C2 informs node H that an MPLS bearer has been successfully transferred, and that the MPLS bearer identifier should be updated.
   15. Node H asks node E to delete the MPLS path from node E to node C1.
Steps 16 and 17 are MPLS standards conform:
   16. Node E asks node D1 to delete the MPLS path.
   17. Node D1 asks node 'C1 to delete the MPLS path.

Although only certain embodiments of the invention have been described herein, it will be understood by any person skilled in the art that other modifications variations and possibilities of the invention are possible.

1. Aspect: Method for transmitting a Multi-Protocol Label Switching (MPLS) header (24) from a first nodal point (N1, B1, C1) to a second nodal point (N2, C1, B1) via a radio communication network (1, 2), in particular a Long Term Evolution (LTE) network, comprising the steps of:
   -- Modifying the Multi-Protocol Label Switching header (24) by reducing the size of the Multi-Protocol Label Switching header (24) and
   -- transmitting the modified Multi-Protocol Label Switching header (24) from the first nodal point (N1, B1, C1) to the second nodal point (N2, C1, B1) by means of an air interface using a dedicated radio bearer.
2. Aspect: Method according to aspect 1, wherein the size of the Multi-Protocol Label Switching header (24) is reduced by removing a MPLS bit label of the Multi-Protocol Label Switching header (24).
3. Aspect: Method for transmitting a Multi-Protocol Label Switching (MPLS) header (24) from a first nodal point (N1, B1, C1) to a second nodal point (N2, C1, B1) via a radio communication network (1, 2), in particular a LTE (Long Term Evolution) network, preferably in accordance with one of the aspects 1 or 2, comprising the steps of:
   -- Modifying the Multi-Protocol Label Switching header (24) by adding a sequence number (26) to the Multi-Protocol Label Switching header (24) and
   -- transmitting the modified Multi-Protocol Label Switching header (24) from the first nodal point (N1, B1, C1) to the second nodal point (N2, C1, B1) by means of an air interface using a dedicated radio bearer.
4. Aspect: Method according to aspect 3, wherein the Multi-Protocol Label Switching header (24) is further modified by applying a ciphering mechanism (27) to the Multi-Protocol Label Switching header (24).
5. Aspect: Method according to one of the preceding aspects further comprising the steps of:
   -- Broadcasting the modified Multi-Protocol Label Switching header (24) by the first nodal point (N1, B1, C1),
   -- receiving the modified Multi-Protocol Label Switching header (24) by the second nodal point (N2, C1, B1) and
   -- de-modifying the received Multi-Protocol Label Switching header (24).
6. Aspect: Method according to aspect 5, wherein the received Multi-Protocol Label Switching header (24) is de-modified by adding a MPLS bit label to the Multi-Protocol Label Switching header (24) which is preferably configured in dependency of a control layer of the modified Multi-Protocol Label Switching header (24) and/or wherein the received Multi-Protocol Label Switching header (24) is re-ordered in dependency of the sequence number (26) and/or wherein the reordered Multi-Protocol Label Switching header (24) is de-modified by removing the sequence number (26) and/or wherein the integrity of the received Multi-Protocol Label Switching header (24) is checked by verifying the ciphering integrity and/or wherein the received Multi-Protocol Label Switching header is de-modified by applying a deciphering mechanism (37) to the received Multi-Protocol Label Switching header (24).
7. Aspect: Method according to one of the preceding aspects, wherein the Multi-Protocol Label Switching header (24) is modified by the first nodal point (N1, B1, C1) and wherein the modified Multi-Protocol Label Switching header (24) is de-modified by the second nodal point (N2, C1, B1), wherein the first nodal point (N1, B1, C1) preferably comprises a mobile node (B1) and/or wherein the second nodal point (N2, C1, B1) preferably comprises a first Label Switching Router (LSR) (C1).
8. Aspect: Method for establishing an Multi-Protocol Label Switching (MPLS) path between a first node (A1) and a second node (A3) through a wired part (3) of a mobile network (1) by means of Multi-Protocol Label Switching (MPLS) and through a radio network part (2) of the mobile network (1) by means of a Long Term Evolution (LTE) radio bearer comprising the steps of:
   -- Establishing a LTE radio bearer between a first mobile node (B1) directly or indirectly connected to the first node (A1) and a first Label Switch Router (C1) directly or indirectly connected to the second node (A3),
   -- transmitting an identifier from the first Label Switch Router (C1) to a mobile network controller (H) of the radio network part (2), wherein the identifier contains information about the air interface bearer to be used for the MPLS path between the first mobile node (B1) and the first Label Switch Router (C1) and
   -- establishing the MPLS path between the first node (A1) and the second node (A3) partly via the LTE radio bearer by using the identifier information.
9. Aspect: Method according to aspect 8, wherein the mobile network controller (H) is informed by the first Label Switch Router (C1) that the MPLS path identified by the identifier information has been established and/or wherein the MPLS path request is initially generated by the first node (A1) and wherein the second node (A3) confirms the MPLS path to the first node (A1) after the MPLS path between the first node (A1) and the second node (A3) has been established.
10. Aspect: Method for establishing an MPLS path between a first node (A1) and a second node (A3) through a wired part (3) of a mobile network (1) by means of Multi-Protocol Label Switching (MPLS) and through a radio network part (2) of the mobile network (1) by means of a Long Term Evolution (LTE) radio bearer comprising the steps of:a
   -- Establishing a LTE radio bearer between a first mobile node (B1) directly or indirectly connected to the first node (A1) and a first Label Switch Router (C1),
   -- transmitting an identifier from the first Label Switch Router (C1) via a mobile network controller (H) of the radio network part to a further Label Switch Router (E) directly or indirectly connected to the second node (A3),
   -- establishing an MPLS path between a first node (A1) and a second node (A3) via the further Label Switch Router (E), the first Label Switch Router (C1) and the first mobile node (B1) by using the identifier,
   -- wherein the identifier indicates that the MPLS path has to be established via the first Label Switch Router (C1) and
   -- wherein the identifier contains information about the air interface bearer to be used for the MPLS path between the first mobile node (B1) and the first Label Switch Router (C1).
11. Aspect: Method according to aspect 10, wherein a MPLS path request is transmitted from the further Label Switch Router (E) to the first Label Switch Router (C1) and wherein the first Label Switch Router (C1) associates the incoming MPLS path request with the established MPLS bearer and forwards the MPLS path request to the first mobile node (B1).
12. Aspect: Method according to one of the aspects 10 or 11, wherein the mobile network controller (H) is informed by the first Label Switch Router (C1) that the MPLS path identified by the identifier information has been established and/or wherein the MPLS path request is initially generated by the second node (A3) and wherein the first node (A1) confirms the MPLS path to the second node (A3) after the MPLS path between the first node (A1) and the second node (A3) has been established.
13. Aspect: Method for performing a handover of an Multi-Protocol Label Switching (MPLS) path established between a first node (A1) and a second node (A3) through a wired part (3) of a mobile network (1) by means of Multi-Protocol Label Switching (MPLS) and through a radio network part (2) of the mobile network (1) by means of a Long Term Evolution (LTE) radio bearer, in particular established by a method according to one of the aspects 8 to 12, comprising the steps of:
   -- Measuring radio signals by a first mobile node (B1) directly or indirectly connected to the first node (A1) and providing a first Label Switch Router (C1) indirectly connected to the second node (A3) via a further Label Switch Router (E) with information about the measured radio signals,
   -- transmitting a handover command from the first Label Switch Router (C1) via a mobile network controller (H) of the radio network part to the further Label Switch Router (E), if the first Label Switch Router (C1) determines on the basis of the measured radio signals that a handover is required, wherein the handover command contains information that the MPLS path has to be redirected via a second Label Switch Router (C2),
   -- transmitting a MPLS request to the second Label Switch Router (C2) from the further Label Switch Router (E) in dependency of the received handover command,
   -- transmitting handover parameters from the first Label Switch Router (C1) to the second Label Switch Router (C2),
   -- establishing a LTE radio bearer between the first mobile node (B1) and the second Label Switch Router (C2),
   -- transmitting an identifier update command from the second Label Switch Router (C2) via the mobile network controller (H) to the further Label Switch Router (E) and
   -- establishing an MPLS path between a first node (A1) and a second node (A3) via the further Label Switch Router (E), the second Label Switch Router (C2) and the first mobile node (B1).
14. Aspect: Method according to aspect 13, wherein the further Label Switch Router (E) deletes the MPLS path to the first Label Switch Router (C1) in dependency of the received identifier update command.
15. Aspect: Method according to one of the aspects 8 to 14, wherein a Multi-Protocol Label Switching (MPLS) header is transmitted via the MPLS path between the mobile node (B1) and the first or second Label Switch Router (C1, C2) by a method according to one of the aspects 1 to 7.

## Claims

1. Method for establishing a Multi-Protocol Label Switching, MPLS, path between a first node (A1) and a second node (A3) through a wired part (3) of a mobile network (1) by means of Multi-Protocol Label Switching, MPLS, and through a radio network part (2) of the mobile network (1) by means of a Long Term Evolution, LTE, radio bearer comprising the steps of:
-- Establishing a LTE radio bearer between a first mobile node (B1) directly or indirectly connected to the first node (A1) and a first Label Switch Router (C1) directly or indirectly connected to the second node (A3),
-- transmitting an identifier from the first Label Switch Router (C1) to a mobile network controller (H) of the radio network part (2), wherein the identifier contains information about the air interface bearer to be used for the MPLS path between the first mobile node (B1) and the first Label Switch Router (C1) and
-- establishing the MPLS path between the first node (A1) and the second node (A3) partly via the LTE radio bearer by using the identifier information.

2. Method according to claim 1, wherein the mobile network controller (H) is informed by the first Label Switch Router (C1) that the MPLS path identified by the identifier information has been established and/or wherein the MPLS path request is initially generated by the first node (A1) and wherein the second node (A3) confirms the MPLS path to the first node (A1) after the MPLS path between the first node (A1) and the second node (A3) has been established.

3. Method for establishing an MPLS path between a first node (A1) and a second node (A3) through a wired part (3) of a mobile network (1) by means of Multi-Protocol Label Switching, MPLS, and through a radio network part (2) of the mobile network (1) by means of a Long Term Evolution, LTE, radio bearer comprising the steps of:
-- Establishing a LTE radio bearer between a first mobile node (B1) directly or indirectly connected to the first node (A1) and a first Label Switch Router (C1),
-- transmitting an identifier from the first Label Switch Router (C1) via a mobile network controller (H) of the radio network part (2) to a further Label Switch Router (E) directly or indirectly connected to the second node (A3),
-- establishing the MPLS path between the first node (A1) and the second node (A3) via the further Label Switch Router (E), the first Label Switch Router (C1) and the first mobile node (B1) by using the identifier,
-- wherein the identifier indicates that the MPLS path has to be established via the first Label Switch Router (C1) and
-- wherein the identifier contains information about the air interface bearer to be used for the MPLS path between the first mobile node (B1) and the first Label Switch Router (C1).

4. Method according to claim 3, wherein a MPLS path request is transmitted from the further Label Switch Router (E) to the first Label Switch Router (C1) and wherein the first Label Switch Router (C1) associates the incoming MPLS path request with the established MPLS bearer and forwards the MPLS path request to the first mobile node (B1).

5. Method according to one of the claims 3 or 4, wherein the mobile network controller (H) is informed by the first Label Switch Router (C1) that the MPLS path identified by the identifier information has been established and/or wherein the MPLS path request is initially generated by the second node (A3) and wherein the first node (A1) confirms the MPLS path to the second node (A3) after the MPLS path between the first node (A1) and the second node (A3) has been established.

6. Method according to one of the claims 1 to 5, wherein a Multi-Protocol Label Switching (MPLS) header is transmitted via the MPLS path between the first mobile node (B1) and the first Label Switch Router (C1).

## Patentansprüche

1. Verfahren zum Herstellen eines Multi-Protocol Label Switching (MPLS)-Pfades zwischen einem ersten Knoten (A1) und einem zweiten Knoten (A3) durch einen leitungsgebundenen Teil (3) eines Mobilnetzes (1) mittels Multi-Protocol Label Switching (MPLS) und durch einen Funknetzteil (2) des Mobilnetzes (1) mittels eines Long Term Evolution (LTE)Funkträgers, das folgende Schritte umfasst:
- Herstellen eines LTE-Funkträgers zwischen einem ersten Mobilknoten (B1), der direkt oder indirekt mit dem ersten Knoten (A1) verbunden ist, und einem ersten Label Switch Router (C1), der direkt oder indirekt mit dem zweiten Knoten (A3) verbunden ist,
- Senden eines Identifikators von dem ersten Label Switch Router (C1) zu einem Mobilnetz-Controller (H) des Funknetzteils (2), wobei der Identifikator Informationen über den Luftschnittstellenträger enthält, der für den MPLS-Pfad zwischen dem ersten Mobilknoten (B1) und dem ersten Label Switch Router (C1) zu verwenden ist, und
- Herstellen des MPLS-Pfades zwischen dem ersten Knoten (A1) und dem zweiten Knoten (A3) teilweise über den LTE-Funkträger unter Verwendung der Identifikator-Informationen.

2. Verfahren nach Anspruch 1, wobei der Mobilnetz-Controller (H) durch den ersten Label Switch Router (C1) informiert wird, dass der durch die Identifikator-Informationen identifizierte MPLS-Pfad hergestellt wurde, und/oder wobei die MPLS-Pfad-Anforderung zunächst durch den ersten Knoten (A1) generiert wird, und wobei der zweite Knoten (A3) dem ersten Knoten (A1) den MPLS-Pfad bestätigt, nachdem der MPLS-Pfad zwischen dem ersten Knoten (A1) und dem zweiten Knoten (A3) hergestellt wurde.

3. Verfahren zum Herstellen eines MPLS-Pfades zwischen einem ersten Knoten (A1) und einem zweiten Knoten (A3) durch einen leitungsgebundenen Teil (3) eines Mobilnetzes (1) mittels Multi-Protocol Label Switching (MPLS) und durch einen Funknetzteil (2) des Mobilnetzes (1) mittels eines Long Term Evolution (LTE)-Funkträgers, das folgende Schritte umfasst:
- Herstellen eines LTE-Funkträgers zwischen einem ersten Mobilknoten (B1), der direkt oder indirekt mit dem ersten Knoten (A1) verbunden ist, und einem ersten Label Switch Router (C1),
- Senden eines Identifikators von dem ersten Label Switch Router (C1) über einen Mobilnetz-Controller (H) des Funknetzteils (2) an einen weiteren Label Switch Router (E), der direkt oder indirekt mit dem zweiten Knoten (A3) verbunden ist,
- Herstellen des MPLS-Pfades zwischen dem ersten Knoten (A1) und dem zweiten Knoten (A3) über den weiteren Label Switch Router (E), den ersten Label Switch Router (C1) und den ersten Mobilknoten (B1) unter Verwendung des Identifikators,
- wobei der Identifikator anzeigt, dass der MPLS-Pfad über den ersten Label Switch Router (C1) herzustellen ist, und
- wobei der Identifikator Informationen über den Luftschnittstellenträger enthält, der für den MPLS-Pfad zwischen dem ersten Mobilknoten (B1) und dem ersten Label Switch Router (C1) zu verwenden ist.

4. Verfahren nach Anspruch 3, wobei eine MPLS-Pfad-Anforderung von dem weiteren Label Switch Router (E) zu dem ersten Label Switch Router (C1) übertragen wird und wobei der erste Label Switch Router (C1) die ankommende MPLS-Pfad-Anforderung mit dem hergestellten MPLS-Träger verknüpft und die MPLS-Pfad-Anforderung an den ersten Mobilknoten (B1) weiterleitet.

5. Verfahren nach einem der Ansprüche 3 oder 4, wobei der Mobilnetz-Controller (H) durch den ersten Label Switch Router (C1) informiert wird, dass der durch die Identifikator-Informationen identifizierte MPLS-Pfad hergestellt wurde, und/oder wobei die MPLS-Pfad-Anforderung zunächst durch den zweiten Knoten (A3) generiert wird und wobei der erste Knoten (A1) dem zweiten Knoten (A3) den MPLS-Pfad bestätigt, nachdem der MPLS-Pfad zwischen dem ersten Knoten (A1) und dem zweiten Knoten (A3) hergestellt wurde

6. Verfahren nach einem der Ansprüche 1 bis 5, wobei ein Multi-Protocol Label Switching (MPLS)-Header über den MPLS-Pfad zwischen dem ersten Mobilknoten (B1) und dem ersten Label Switch Router (C1) übertragen wird.

## Revendications

1. Procédé d'établissement d'un chemin de commutation multiprotocole par étiquette, MPLS, entre un premier noeud (A1) et un second noeud (A3) par l'intermédiaire d'une partie filaire (3) d'un réseau mobile (1) au moyen d'une commutation multiprotocole par étiquette, MPLS, et par l'intermédiaire d'une partie de réseau radio (2) du réseau mobile (1) au moyen d'un support radio à évolution à long terme, LTE, comprenant les étapes consistant à :
- établir un support radio LTE entre un premier noeud mobile (B1) relié directement ou indirectement au premier noeud (A1) et un premier routeur à commutation par étiquette (C1) relié directement ou indirectement au second noeud (A3),
- transmettre un identificateur à partir du premier routeur à commutation par étiquette (C1) à un contrôleur de réseau mobile (H) de la partie de réseau radio (2), dans lequel l'identificateur contient des informations sur le support d'interface radio à utiliser pour le chemin MPLS entre le premier noeud mobile (B1) et le premier routeur à commutation par étiquette (C1), et
- établir le chemin MPLS entre le premier noeud (A1) et le second noeud (A3) en partie par l'intermédiaire du support radio LTE en utilisant les informations d'identificateur.

2. Procédé selon la revendication 1, dans lequel le contrôleur de réseau mobile (H) est informé par le premier routeur à commutation par étiquette (C1) que le chemin MPLS identifié par les informations d'identificateur a été établi et/ou dans lequel la demande de chemin MPLS est générée initialement par le premier noeud (A1), et dans lequel le second noeud (A3) confirme le chemin MPLS au premier noeud (A1) après que le chemin MPLS entre le premier noeud (A1) et le second noeud (A3) a été établi.

3. Procédé d'établissement d'un chemin MPLS entre un premier noeud (A1) et un second noeud (A3) par l'intermédiaire d'une partie filaire (3) d'un réseau mobile (1) au moyen d'une commutation multiprotocole par étiquette, MPLS, et par l'intermédiaire d'une partie de réseau radio (2) du réseau mobile (1) au moyen d'un support radio à long terme, LTE, comprenant les étapes consistant à :
- établir un support radio LTE entre un premier noeud mobile (B1) relié directement ou indirectement au premier noeud (A1) et un premier routeur à commutation par étiquette (C1),
- transmettre un identificateur à partir du premier routeur à commutation par étiquette (C1) par l'intermédiaire d'un contrôleur de réseau mobile (H) de la partie de réseau radio (2) à un autre routeur à commutation par étiquette (E) relié directement ou indirectement au second noeud (A3)
- établir le chemin MPLS entre le premier noeud (A1) et le second noeud (A3) par l'intermédiaire de l'autre routeur à commutation par étiquette (E), du premier routeur à commutation par étiquette (C1) et du premier noeud mobile (B1) en utilisant l'identificateur,
- dans lequel l'identificateur indique que le chemin MPLS doit être établi par l'intermédiaire du premier routeur à commutation par étiquette (C1), et
- dans lequel l'identificateur contient des informations sur le support d'interface radio à utiliser pour le chemin MPLS entre le premier noeud mobile (B1) et le premier routeur à commutation par étiquette (C1).

4. Procédé selon la revendication 3, dans lequel une demande de chemin MPLS est transmise à partir de l'autre routeur à commutation par étiquette (E) au premier routeur à commutation par étiquette (C1), et dans lequel le premier routeur à commutation par étiquette (C1) associe la demande de chemin MPLS entrante au support MPLS établi et transmet la demande de chemin MPLS au premier noeud mobile (B1) .

5. Procédé selon l'une des revendications 3 ou 4, dans lequel le contrôleur de réseau mobile (H) est informé par le premier routeur à commutation par étiquette (C1) que le chemin MPLS identifié par les informations d'identificateur a été établi et/ou dans lequel la demande de chemin MPLS est générée initialement par le second noeud (A3), et dans lequel le premier noeud (A1) confirme le chemin MPLS au second noeud (A3) après que le chemin MPLS entre le premier noeud (A1) et le second noeud a été établi.

6. Procédé selon l'une des revendications 1 à 5, dans lequel un en-tête de commutation multiprotocole par étiquette, MPLS, est transmis par l'intermédiaire du chemin MPLS entre le premier noeud mobile (B1) et le premier routeur à commutation par étiquette (C1).
